# EUROPÄISCHE PATENTSCHRIFT

(11) **EP 3 095 547 B1**
(45) Veröffentlichungstag und Bekanntmachung des Hinweises auf die Patenterteilung: **14.09.2022**
(21) Anmeldenummer: 16167933.7
(22) Anmeldetag: 02.05.2016
(51) Int. Cl.: B23K 26/08, H05B 6/12, B23K 26/364, B23K 101/34, B23K 103/00

(54) **VERFAHREN ZUR HERSTELLUNG EINER KOCHFELDPLATTE UND KOCHFELDPLATTE**
METHOD FOR PRODUCING A HOTPLATE FIELD AND HOTPLATE FIELD
PROCEDE DE PRODUCTION D'UNE PLAQUE DE CUISSON ET PLAQUE DE CUISSON

(30) Priorität: 22.05.2015 ES 201530707
(43) Veröffentlichungstag der Anmeldung: 23.11.2016
(73) Patentinhaber: BSH Hausgeräte GmbH, 81739 München (DE)
(72) Erfinder: Alaman Aguilar, Jorge, 50008 Zaragoza (ES); Camañes Vera, Victor, 50003 Zaragoza (ES); Ceamanos Gaya, Jesús, 50016 Zaragoza (ES); Fuertes Pinol, Clara, 50010 Zaragoza (ES); de Val Sanz, Erika, 50003 Zaragoza (ES)

(56) Entgegenhaltungen:
- EP-A1- 2 573 204
- ES-A1- 2 501 315
- US-A- 5 742 026

## Beschreibung

Die Erfindung geht aus von einem Verfahren zur Herstellung einer Kochfeldplatte nach dem Oberbegriff des Patentanspruchs 1. Die Erfindung betrifft zudem eine Kochfeldplatte, welche durch ein solches Verfahren hergestellt ist, nach dem Patentanspruch 10. ES2501315 A1 offenbart den Oberbegriff der Ansprüche 1 und 10.

Aus dem Stand der Technik ist bereits ein Verfahren zur Herstellung einer Kochfeldplatte bekannt, welche aus einer Grundplatte mit einer Vielzahl an Vorsprüngen hergestellt wird. Um eine im Wesentlichen ebene Oberfläche der Kochfeldplatte herzustellen, werden an der Grundplatte in den Zwischenräumen benachbarter Vorsprünge Füllmaterialien eingebracht, wie beispielsweise Silikone und/oder Harze.

Die Aufgabe der Erfindung besteht insbesondere darin, ein gattungsgemäßes Verfahren zu optimieren. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

Die Erfindung geht aus von einem Verfahren zur Herstellung einer Kochfeldplatte, welche aus einer Grundplatte hergestellt wird, die eine Vielzahl von Vorsprüngen aufweist.

Es wird vorgeschlagen, dass ein Vorsprung mittels einer Laserbearbeitung wenigstens teilweise entfernt wird. Unter einer "Kochfeldplatte" soll insbesondere eine Einheit verstanden werden, die in wenigstens einem Betriebszustand zu einem Aufstellen von Gargeschirr vorgesehen ist und die insbesondere dazu vorgesehen ist, einen Teil eines Außengehäuses, insbesondere eines die Kochfeldplatte aufweisenden Kochfelds, auszubilden. Die Kochfeldplatte besteht insbesondere wenigstens zu einem Großteil aus Glas und/oder Glaskeramik. Unter "wenigstens zu einem Großteil" soll insbesondere zu einem Anteil von mindestens 70 %, insbesondere von mindestens 80 %, vorteilhaft von mindestens 90 % und vorzugsweise von mindestens 95 % verstanden werden. Unter einer "Grundplatte" soll insbesondere eine Einheit verstanden werden, bei welcher ein gedachter minimaler, die Einheit gerade noch umschließender Quader eine wenigstens im Wesentlichen plattenförmige Gestalt aufweist, deren Dicke insbesondere maximal 10 %, vorteilhaft maximal 5 %, besonders vorteilhaft maximal 3 % und vorzugsweise maximal 2 % einer Länge und/oder Breite der Einheit beträgt. Die Grundplatte weist insbesondere zumindest ein Plattenelement auf. Beispielsweise ist denkbar, dass die Grundplatte zumindest eine Beschichtung und/oder zumindest eine Texturierung aufweist. Unter einem "Plattenelement" der Grundplatte soll insbesondere ein Element verstanden werden, welches eine Form der Grundplatte wenigstens im Wesentlichen definiert und/oder welches einen maximalen Massenanteil zu einer Gesamtmasse der Grundplatte beiträgt. Eine Masse des Plattenelements beträgt insbesondere mindestens 70 %, vorteilhaft mindestens 80 %, besonders vorteilhaft mindestens 90 % und vorzugsweise mindestens 95 % eines Werts der Gesamtmasse der Grundplatte. Insbesondere weist das Plattenelement eine Dicke auf, die Wesentlich kleiner ist als eine Breite und/oder eine Länge des Plattenelements. Unter einer "Dicke" eines Elements, insbesondere des Plattenelements, soll insbesondere ein Minimum unter den maximalen Ausdehnungen des Elements entlang beliebiger Raumrichtungen verstanden werden. Unter einer "maximalen Ausdehnung" eines Elements, insbesondere des Plattenelements, entlang einer Raumrichtung soll insbesondere die maximale Länge aller Strecken verstanden werden, die zwei Randpunkte des Elements verbinden und parallel zu der Raumrichtung verlaufen. Unter einer "Breite" und einer "Länge" eines Elements, insbesondere des Plattenelements, sollen insbesondere die maximalen Ausdehnungen des Elements entlang von zwei Raumrichtungen verstanden werden, die zumindest im Wesentlichen senkrecht zueinander stehen und vorzugsweise zumindest im Wesentlichen senkrecht zu einer Raumrichtung stehen, entlang der das Element als maximale Ausdehnung die Dicke aufweist. Insbesondere sind Länge und Breite des Elements, insbesondere des Plattenelements, die maximalen Ausdehnungen entlang von Raumrichtungen, für die die Summe der maximalen Ausdehnungen maximal sind. Das Plattenelement ist insbesondere als eine echte Platte ausgebildet. Unter einem "Vorsprung" soll insbesondere ein Element einer Einheit, vorteilhaft der Grundplatte und/oder der Kochfeldplatte, verstanden werden, welches über ein Plattenelement der Einheit hervorragt. Beispielsweise könnte der Vorsprung bei Betrachtung in wenigstens einer Querschnittsebene und/oder bei Betrachtung wenigstens einer Projektion des Vorsprungs auf eine Ebene eine wenigstens im Wesentlichen eckige Form, insbesondere rechteckige und/oder n-eckige und/oder quadratische Form, und/oder eine wenigstens im Wesentlichen ovale Form, insbesondere ellipsenförmige und/oder runde und/oder kreisrunde Form, aufweisen. Der Vorsprung weist insbesondere eine wenigstens im Wesentlichen halbkugelförmige Gestalt auf. Unter einer "Laserbearbeitung" eines Bereichs der Grundplatte soll insbesondere eine Bestrahlung wenigstens des Bereichs der Grundplatte mit einem Laser verstanden werden, wobei durch die Bestrahlung insbesondere eine Strukturänderung und/oder eine Abtragung des Bereichs hervorgerufen und/oder induziert wird, insbesondere durch eine lokale Temperaturerhöhung. Die Laserbearbeitung ist insbesondere als eine Laserablation ausgebildet, wobei zumindest der Vorsprung mittels Laserablation entfernt wird. Insbesondere wird bei der Laserablation Material zumindest eines Objekts, insbesondere des Vorsprungs und/oder zumindest einer Beschichtung, abgetragen. Unter der Wendung, dass ein Objekt, insbesondere der Vorsprung und/oder zumindest eine Beschichtung der Grundplatte, mittels einer Laserbearbeitung "wenigstens teilweise entfernt" wird, soll insbesondere verstanden werden, dass das Objekt mittels der Laserbearbeitung zu einem Massenanteil und/oder Volumenanteil von mindestens 70 %, insbesondere von mindestens 80 %, vorteilhaft von mindestens 90 % und vorzugsweise von mindestens 95 % entfernt wird. Insbesondere wird das Objekt, insbesondere der Vorsprung und/oder zumindest eine Beschichtung der Grundplatte, bei der Laserbearbeitung vollständig entfernt, wobei insbesondere eine Dicke der Grundplatte in dem Bereich des zu entfernenden Objekts, insbesondere des Vorsprungs und/oder zumindest eine Beschichtung der Grundplatte, auf die minimale Dicke der Grundplatte reduziert wird. Die minimale Dicke der Grundplatte entspricht insbesondere wenigstens im Wesentlichen einer Dicke des Plattenelements der Grundplatte. Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Durch die erfindungsgemäße Ausgestaltung kann insbesondere ein gattungsgemäßes Verfahren optimiert werden. Insbesondere kann eine hohe Vielfalt hinsichtlich einer Gestaltungsfreiheit ermöglicht werden, wodurch insbesondere unter Vermeidung zusätzlicher Kosten eine hohe Vielfalt an unterschiedlichen Formen in einen Bearbeitungsbereich, welcher mittels der Laserbearbeitung bearbeitet wird, eingebracht werden können. Insbesondere kann eine Automatisierung der Herstellung der Kochfeldplatte ermöglicht werden, wodurch insbesondere eine einfache Kombination mit weiteren Herstellungsmethoden, wie beispielsweise mit einem Siebdruckverfahren und vorteilhaft anderen Verfahren zu einer Einbringung und/oder zu einem Entfernen von Material, erreicht werden kann. Eine Transluzenz und/oder Transparenz der Kochfeldplatte kann insbesondere optimiert und/oder eine Diffusivität reduziert werden, insbesondere in einem Vergleich zu einer Kochfeldplatte, bei welcher Zwischenräume zwischen benachbarten Vorsprüngen durch Harz aufgefüllt wurden.

Ferner wird vorgeschlagen, dass der Vorsprung, welcher mittels der Laserbearbeitung wenigstens teilweise entfernt wird, zumindest eine Erstreckung aufweist, welche wesentlich kleiner ist als eine korrespondierende Erstreckung eines Plattenelements, insbesondere des Plattenelements, der Grundplatte. Die Erstreckung des Vorsprungs weist insbesondere einen Wert von maximal 5 mm, insbesondere von maximal 4 mm, vorteilhaft von maximal 3 mm und besonders vorteilhaft von maximal 2 mm auf. Insbesondere weist die korrespondierende Erstreckung des Plattenelements der Grundplatte einen Wert von mindestens 400 mm, insbesondere von mindestens 500 mm, vorteilhaft von mindestens 600 mm und besonders vorteilhaft von mindestens 800 mm auf. Unter der Wendung, dass der Vorsprung zumindest eine Erstreckung aufweist, welche "wesentlich kleiner" ist als eine korrespondierende Erstreckung eines Plattenelements der Grundplatte, soll insbesondere verstanden werden, dass die Erstreckung des Vorsprungs einen Wert annimmt, der maximal 5 %, insbesondere maximal 2 %, vorteilhaft maximal 1 %, besonders vorteilhaft maximal 0,5 %, vorzugsweise maximal 0,3 % und vorzugsweise maximal 0,2 % eines Werts der korrespondierenden Erstreckung eines Plattenelements der Grundplatte beträgt. Unter einer zu einer ersten Erstreckung "korrespondierenden" zweiten Erstreckung soll insbesondere verstanden werden, dass die erste Erstreckung und die zweite Erstreckung wenigstens im Wesentlichen parallel zueinander ausgerichtet sind. Unter der Wendung, dass eine Gerade und/oder Ebene "wenigstens im Wesentlichen parallel" zu einer weiteren, von der einen Gerade und/oder Ebene getrennt ausgebildeten Gerade und/oder Ebene ausgerichtet ist, soll insbesondere verstanden werden, dass die Gerade und/oder Ebene mit der weiteren Gerade und/oder Ebene einen Winkel einschließt, der vorzugsweise um weniger als 15°, vorteilhaft um weniger als 10° und insbesondere um weniger als 5° von einem Winkel von 0° abweicht. Dadurch kann insbesondere ein schneller Herstellungsprozess der Kochfeldplatte erzielt werden. Insbesondere kann ein Bereich, in welchem Vorsprünge wenigstens teilweise entfernt werden, gezielt und präzise eingestellt werden.

Zudem wird vorgeschlagen, dass die Grundplatte zumindest eine Beschichtung aufweist, die mittels einer Laserbearbeitung wenigstens teilweise entfernt wird. Unter einer "Beschichtung" soll insbesondere ein räumliches Element verstanden werden, das an eine Form einer Oberfläche eines Objekts, insbesondere der Grundplatte und/oder der Kochfeldplatte, angepasst ist und das insbesondere eine Dicke, insbesondere eine Materialstärke, aufweist, welche kleiner ist als eine minimale Erstreckung, insbesondere als eine Dicke, des Objekts. Die Beschichtung weist insbesondere eine Dicke und/oder Materialstärke von mindestens 0,001 %, insbesondere von mindestens 0,01 %, vorteilhaft von mindestens 0,1 %, besonders vorteilhaft von mindestens 0,15 %, vorzugsweise von mindestens 0,2 % und besonders bevorzugt von mindestens 0,25 % eines Werts einer Dicke des Objekts auf. Insbesondere weist die Beschichtung eine Dicke und/oder Materialstärke von maximal 25 %, insbesondere von maximal 20 %, vorteilhaft von maximal 15 %, besonders vorteilhaft von maximal 10 %, vorzugsweise von maximal 5 % und besonders bevorzugt von maximal 3 % eines Werts einer Dicke des Objekts auf. Insbesondere ist die Beschichtung wenigstens im Wesentlichen intransparent insbesondere für sichtbares Licht ausgebildet. Dadurch kann insbesondere auf einen weiteren separaten Herstellungsschritt der Kochfeldplatte und/oder zusätzliche Herstellungswerkzeuge verzichtet werden. Hierdurch können insbesondere geringe Kosten und/oder ein schneller Herstellungsprozess der Kochfeldplatte erzielt werden.

Beispielsweise könnten ein wenigstens teilweises Entfernen der Beschichtung und ein wenigstens teilweises Entfernen des Vorsprungs getrennt voneinander und insbesondere in verschiedenen Verfahrensschritten durchgeführt werden, welche insbesondere zeitlich zueinander beabstandet sein könnten und zwischen welchen ein Laser, mittels welchem das wenigstens teilweise Entfernen der Beschichtung und das wenigstens teilweise Entfernen des Vorsprungs durchgeführt wird, insbesondere abgeschaltet würde. Vorteilhaft werden ein wenigstens teilweises Entfernen der Beschichtung und ein wenigstens teilweises Entfernen des Vorsprungs wenigstens im Wesentlichen in demselben Verfahrensschritt durchgeführt. Beispielsweise könnte das wenigstens teilweise Entfernen der Beschichtung und das wenigstens teilweise Entfernen des Vorsprungs in einem insbesondere einzigen Laserscan durchgeführt werden, insbesondere unter Vermeidung einer Abschaltung des Lasers. Alternativ könnte mittels eines ersten Laserscans ein erstes Objekt, insbesondere die Beschichtung und/oder der Vorsprung, wenigstens teilweise entfernt werden und in einem direkt an den ersten Laserscan anschließenden zweiten Laserscan könnte ein zweites Objekt, insbesondere der Vorsprung und/oder die Beschichtung, wenigstens teilweise entfernt werden. In einer alternativen Ausgestaltung könnten der Vorsprung und die Beschichtung insbesondere genau gleichzeitig entfernt werden, wobei insbesondere jeder zu bearbeitende Punkt für eine vorgegebene Zeitspanne dauerhaft mittels eines Laserstrahls des Lasers bestrahlt werden könnte, um insbesondere den Vorsprung und die Beschichtung zu entfernen. Unter der Wendung, dass das wenigstens teilweise Entfernen der Beschichtung und das wenigstens teilweise Entfernen des Vorsprungs "wenigstens im Wesentlichen in demselben Verfahrensschritt" durchgeführt werden, soll insbesondere verstanden werden, dass das wenigstens teilweise Entfernen der Beschichtung und das wenigstens teilweise Entfernen des Vorsprungs unter Vermeidung einer Abschaltung des Lasers durchgeführt werden, und/oder dass zwischen einem Abschluss des wenigstens teilweisen Entfernens einer ersten Komponente, insbesondere der Beschichtung und/oder des Vorsprungs, und einem Beginn des wenigstens teilweise Entfernens einer zweiten Komponente, insbesondere des Vorsprungs und/oder der Beschichtung, eine Zeitspanne von maximal 60 s, insbesondere von maximal 30 s, vorteilhaft von maximal 15 s, besonders vorteilhaft von maximal 10 s, vorzugsweise von maximal 5 s und besonders bevorzugt von maximal 3 s liegt, innerhalb welcher insbesondere eine Ausrichtung des Laserstrahls verändert wird. Dadurch kann insbesondere ein schnelles Entfernen von Material aus einem Bereich der Grundplatte und/oder eine kurze Laserbearbeitungszeit der Grundplatte erzielt werden.

Bei dem wenigstens teilweisen Entfernen der Beschichtung und dem wenigstens teilweisen Entfernen des Vorsprungs könnte ein Laserstrahl beispielsweise in beiden Fällen in wenigstens im Wesentlichen dieselbe Bearbeitungsrichtung relativ zu der Grundplatte bewegt werden. Vorzugsweise wird bei dem wenigstens teilweisen Entfernen der Beschichtung und dem wenigstens teilweisen Entfernen des Vorsprungs durch die Laserbearbeitung ein Laserstrahl in zwei voneinander verschiedene Bearbeitungsrichtungen insbesondere relativ zu der Grundplatte bewegt. Vorteilhaft schließen eine erste Bearbeitungsrichtung der Bearbeitungsrichtungen und eine zweite Bearbeitungsrichtung der Bearbeitungsrichtungen einen Schnittwinkel von wenigstens im Wesentlichen 90° ein. Unter zwei "voneinander verschiedenen" Bearbeitungsrichtungen sollen insbesondere zwei Bearbeitungsrichtungen verstanden werden, welche sich bei einer Projektion in eine Ebene, welche insbesondere wenigstens im Wesentlichen parallel zu einer Haupterstreckungsebene der Grundplatte ausgerichtet ist, unter einem Schnittwinkel in einem Bereich von 30° bis 150°, insbesondere von 45° bis 135°, vorteilhaft von 60° bis 120° und vorzugsweise von 75° bis 105° schneiden. In diesem Zusammenhang soll unter einem "Schnittwinkel" zwischen zwei Richtungen ein Winkel verstanden werden, welcher notwendig ist, um eine der beiden Richtungen durch Drehung in der Ebene parallel zu einer weiteren der Richtungen auszurichten. Unter einer "Haupterstreckungsebene" eines Objekts soll insbesondere eine Ebene verstanden werden, welche parallel zu einer größten Seitenfläche eines kleinsten gedachten geometrischen Quaders ist, welcher das Objekt gerade noch vollständig umschließt, und insbesondere durch den Mittelpunkt des Quaders verläuft. Beispielsweise könnte die Grundplatte bewegt und der Laserfokus ortsfest gehalten werden. Alternativ könnte der Laserfokus bewegt und die Grundplatte ortsfest gehalten werden. Dadurch kann insbesondere eine gründliche Bearbeitung der Grundplatte, insbesondere eines Bereichs einer Oberfläche der Grundplatte, erreicht werden. Insbesondere kann sämtliches zu entfernendes Material aus dem Bereich der Oberfläche der Grundplatte entfernt werden.

Ferner wird vorgeschlagen, dass zwischen einer Vorzugsrichtung eines Bearbeitungsbereichs und einer Bearbeitungsrichtung einer Bearbeitungslinie eines Laserstrahls ein Winkel von wenigstens im Wesentlichen 45° verwendet wird. Die Vorzugsrichtung könnte beispielsweise durch eine Kante der zu bearbeitenden Markierung definiert sein, welche insbesondere wenigstens im Wesentlichen parallel zu einer Längserstreckung des zu bearbeitenden Bearbeitungsbereichs ausgerichtet sein könnte. Unter einer "Bearbeitungslinie" soll in diesem Zusammenhang insbesondere eine vorzugsweise gerade Verbindungslinie einer Teilmenge von zeitlich unmittelbar nacheinander eingebrachten Laserbearbeitungsobjekten verstanden werden. Unter einem "Laserbearbeitungsobjekt" soll insbesondere ein räumlicher Bereich der Grundplatte verstanden werden, welcher einer Laserbestrahlung unterzogen wurde, wodurch in dem Bereich insbesondere eine Strukturänderung hervorgerufen und/oder induziert wurde. Dadurch kann insbesondere eine homogene Bearbeitung des Bearbeitungsbereichs erzielt werden. Insbesondere können optische Defekte und/oder eine Überhitzung von in dem Bearbeitungsbereich angeordnetem Material vermieden werden.

Weiterhin wird vorgeschlagen, dass bei der Laserbearbeitung ein Laserstrahl relativ zu der Grundplatte in zueinander parallelen Bearbeitungslinien mit sich um mindestens 5 %, insbesondere um mindestens 7 %, vorteilhaft um mindestens 10 %, besonders vorteilhaft um mindestens 14 % und vorzugsweise um mindestens 18 % überlappenden Linienbreiten benachbarter Bearbeitungslinien bewegt wird. Unter sich um x % "überlappenden" Linienbreiten benachbarter Bearbeitungslinien soll insbesondere verstanden werden, dass eine erste Linienbreite einer ersten Bearbeitungslinie um x % einer Breite einer insbesondere jeweiligen der Bearbeitungslinien in eine zweite Linienbreite einer zweiten zu der ersten Bearbeitungslinie benachbarte Bearbeitungslinie hineinragt und/oder mit dieser überschneidend angeordnet ist. Unter einer "Breite" einer Linie soll insbesondere eine kleinste Länge eines kleinsten gedachten, die Linie gerade noch umschließenden Rechtecks verstanden werden. Unter einer "Linienbreite" soll insbesondere eine Breite einer Bearbeitungslinie des Laserstrahls verstanden werden. Beispielsweise könnte die Grundplatte bewegt und der Laserfokus ortsfest gehalten werden. Alternativ könnte der Laserfokus bewegt und die Grundplatte ortsfest gehalten werden. Dadurch kann insbesondere sämtliches zu entfernendes Material, insbesondere des Vorsprungs und/oder der Beschichtung, entfernt werden.

Ferner wird vorgeschlagen, dass bei der Laserbearbeitung eine Linienbreite eines Laserstrahls von mindestens 30 µm, insbesondere von mindestens 35 µm, vorteilhaft von mindestens 50 µm, besonders vorteilhaft von mindestens 75 µm und vorzugsweise von mindestens 100 µm verwendet wird. Insbesondere wird bei der Laserbearbeitung eine Linienbreite eines Laserstrahls von maximal 5 mm, insbesondere von maximal 3 mm, vorteilhaft von maximal 2 mm, besonders vorteilhaft von maximal 1 mm und vorzugsweise von maximal 0,5 mm verwendet. Dadurch kann insbesondere eine relativ großflächige Bearbeitung der Grundplatte durchgeführt und/oder ein geringer Zeitaufwand ermöglicht werden.

Bei der Laserbearbeitung könnte beispielsweise ein Infrarot-Laser verwendet werden, welcher insbesondere dazu vorgesehen sein könnte, zumindest Infrarot-Strahlung zu emittieren. Beispielsweise ist denkbar, dass bei der Laserbearbeitung ein Laser mit einer Wellenlänge in einem Bereich von sichtbarem Licht, insbesondere in einem Bereich von 380 nm bis 780 nm verwendet wird, wobei beispielsweise ein Laser mit einer Wellenlänge von wenigstens im Wesentlichen 532 nm verwendet werden könnte. Vorzugsweise wird bei der Laserbearbeitung ein Ultraviolett-Laser verwendet, welcher insbesondere dazu vorgesehen ist, zumindest Ultraviolett-Strahlung zu emittieren. Beispielsweise könnte bei der Laserbearbeitung ein Laser verwendet werden, welcher einen wenigstens im Wesentlichen kontinuierlichen Laserstrahl emittiert. Vorteilhaft wird bei der Laserbearbeitung ein gepulster Laser, insbesondere ein gepulster Festkörperlaser, verwendet. Insbesondere wird bei der Laserbearbeitung ein Laser mit einer Leistung von mindestens 1 W, vorteilhaft von mindestens 2 W, besonders vorteilhaft von mindestens 5 W, vorzugsweise von mindestens 10 W und besonders bevorzugt von mindestens 15 W verwendet. Unter "Infrarot-Strahlung" soll insbesondere elektromagnetische Strahlung aus einem Wellenlängenbereich von 780 nm bis 0,3 mm verstanden werden. Unter "Ultraviolett-Strahlung" soll insbesondere elektromagnetische Strahlung aus einem Wellenlängenbereich von 1 nm bis 380 nm verstanden werden. Dadurch kann insbesondere ein gründliches und/oder mit hoher Präzision ausgeführtes Entfernen von Material, insbesondere des Vorsprungs und/oder der Beschichtung, ermöglicht werden.

In einer weiteren Ausgestaltung wird eine Kochfeldplatte vorgeschlagen, hergestellt durch ein erfindungsgemäßes Verfahren, mit zumindest einem Bereich, welcher frei von Vorsprüngen ist, und mit zumindest einem weiteren Bereich, in welchen eine Vielzahl von Vorsprüngen angeordnet sind. Vorteilhaft ist der Bereich als ein innenliegender Bereich ausgebildet. Der Bereich unterscheidet sich insbesondere von einem randseitigen Bereich, wodurch insbesondere über eine gesamte Erstreckung der Kochfeldplatte eine hohe Stabilität ermöglicht werden kann. Insbesondere umgibt, vorteilhaft umschließt, der weitere Bereich den Bereich wenigstens teilweise, insbesondere wenigstens zu einem Großteil und vorteilhaft vollständig. Eine Flächenerstreckung des Bereichs, welche insbesondere wenigstens im Wesentlichen parallel zu einer Haupterstreckungsebene der Grundplatte ausgerichtet ist, ist insbesondere wesentlich kleiner als eine Flächenerstreckung des weiteren Bereichs. Die Flächenerstreckung des Bereichs könnte beispielsweise maximal 100 mm², insbesondere maximal 50 mm², vorteilhaft maximal 30 mm² und vorzugsweise maximal 20 mm² betragen. Dadurch kann insbesondere eine hohe Flexibilität erreicht werden. Insbesondere kann in dem Bereich eine gewünschte Markierung zumindest eines Objekts, beispielsweise zumindest eines Heizelements und/oder zumindest eines Bedienelements, und/oder eine Positionierung zumindest eines weiteren Objekts, beispielsweise einer Bedieneinheit, ermöglicht werden, während vorteilhaft in dem weiteren Bereich eine hohe Stabilität erzielt werden kann.

Ferner wird vorgeschlagen, dass der Bereich und der weitere Bereich in einer Einbaulage auf einer Unterseite insbesondere der Kochfeldplatte angeordnet sind. Unter einer "Unterseite" eines Objekts, insbesondere der Kochfeldplatte, soll insbesondere eine Seite verstanden werden, welche in der Einbaulage einem Bediener abgewandt und/oder zumindest einem Heizelement zugewandt angeordnet ist. Dadurch kann insbesondere eine wenigstens im Wesentlichen glatte und/oder ebene Oberseite zu einem Aufstellen von Gargeschirr ermöglicht und insbesondere zeitgleich ein hoher Komfort, insbesondere in Form einer hohen Stabilität und/oder einer vorteilhaften Beleuchtung von Objekten, bereitgestellt werden.

Das Verfahren und/oder die Kochfeldplatte sollen/soll hierbei nicht auf die oben beschriebene Anwendung und Ausführungsform beschränkt sein. Insbesondere kann das Verfahren und/oder die Kochfeldplatte zu einer Erfüllung einer hierin beschriebenen Funktionsweise eine von einer hierin genannten Verfahrensschritte, Anzahl von einzelnen Elementen, Bauteilen und Einheiten abweichende Anzahl aufweisen.

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein Kochfeld mit einer Kochfeldplatte in einer schematischen Draufsicht,
- Fig. 2: einen Ausschnitt einer Oberflächenseite einer Grundplatte, aus welcher die Kochfeldplatte in einem Verfahren zur Herstellung der Kochfeldplatte hergestellt wird, vor einem Beginn des Verfahrens in einer schematischen Darstellung,
- Fig. 3: einen Laser, einen Laserstrahl und einen Ausschnitt der Grundplatte während des Verfahrens in einer schematischen Schnittdarstellung,
- Fig. 4: einen Ausschnitt der Grundplatte bei einer Laserbearbeitung während des Verfahrens in einer schematischen Draufsicht und
- Fig. 5: einen Ausschnitt der Kochfeldplatte, welche mittels des Verfahrens zur Herstellung der Kochfeldplatte hergestellt wurde, nach Ende des Verfahrens in einer schematischen Darstellung.

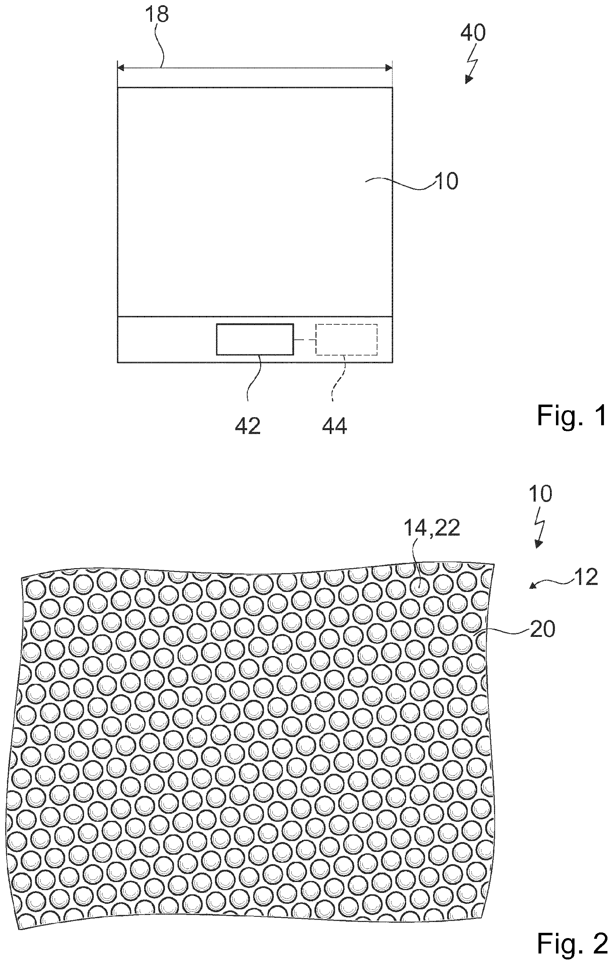

Fig. 1 zeigt ein Kochfeld 40, das als ein Induktionskochfeld ausgebildet ist, mit einer Kochfeldplatte 10. In einem montierten Zustand bildet die Kochfeldplatte 10 einen Teil eines Außengehäuses aus, und zwar insbesondere eines Außengehäuses des Kochfelds 40. Die Kochfeldplatte 10 ist zu einem Aufstellen von Gargeschirr vorgesehen. Das Kochfeld 40 umfasst mehrere Heizelemente (nicht dargestellt), die jeweils dazu vorgesehen sind, auf der Kochfeldplatte 10 oberhalb der Heizelemente aufgestelltes Gargeschirr zu erhitzen. Die Heizelemente sind als Induktionsheizelemente ausgebildet.

Das Kochfeld 40 umfasst eine Bedieneinheit 42 zu einer Eingabe und/oder zu einer Auswahl von Betriebsparametern, beispielsweise einer Heizleistung und/oder einer Heizleistungsdichte und/oder einer Heizzone. Die Bedieneinheit 42 ist zu einer Ausgabe eines Werts eines Betriebsparameters an einen Bediener vorgesehen. Das Kochfeld 40 umfasst eine Steuereinheit 44, die dazu vorgesehen ist, in Abhängigkeit von mittels der Bedieneinheit 42 eingegebener Betriebsparameter Aktionen auszuführen und/oder Einstellungen zu verändern. Die Steuereinheit 44 regelt in einem Heizbetriebszustand eine Energiezufuhr zu den Heizelementen. In einer Einbaulage sind die Bedieneinheit 42 und die Steuereinheit 44 zu einem Großteil unterhalb der Kochfeldplatte 10 angeordnet.

Die Kochfeldplatte 10 ist durch ein Verfahren zur Herstellung der Kochfeldplatte 10 hergestellt. In dem Verfahren zur Herstellung der Kochfeldplatte 10 wird die Kochfeldplatte 10 aus einer Grundplatte 12 hergestellt (vgl. Fig. 2). Die Grundplatte 12 weist eine Vielzahl von Vorsprüngen 14 auf.

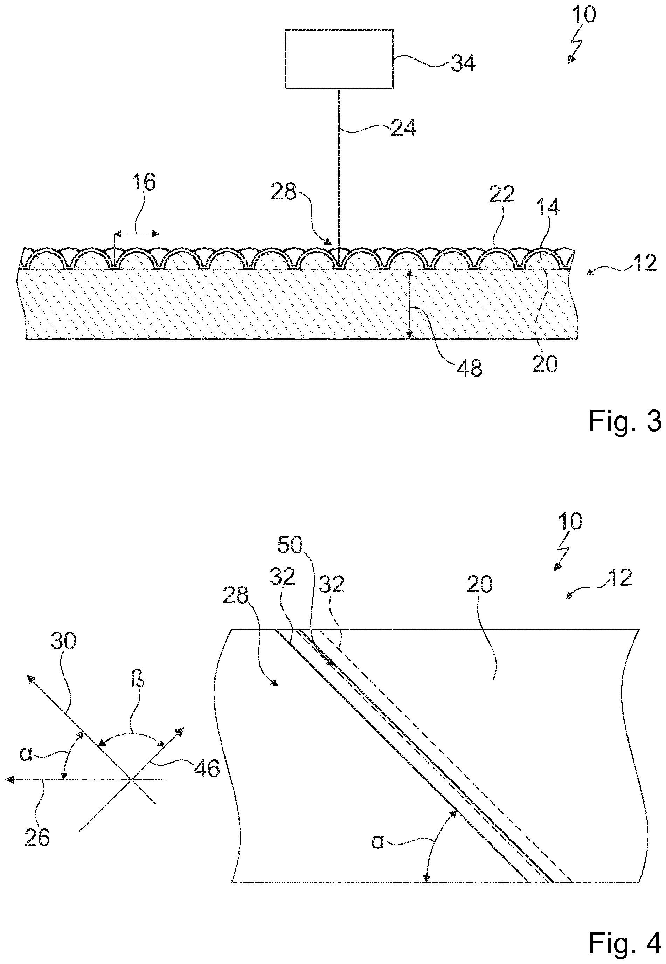

Die Grundplatte 12 weist ein Plattenelement 20 auf (vgl. Fig. 3). Das Plattenelement 20 definiert im Wesentlichen eine äußere Form der Grundplatte 12. Das Plattenelement 20 weist eine Dicke 48 auf, die einer minimalen Dicke der Grundplatte 12 entspricht.

Die Vorsprünge 14 sind auf einer Oberflächenseite des Plattenelements 20 der Grundplatte 12 angeordnet. Die Oberflächenseite des Plattenelements 20 der Grundplatte 12 ist im Wesentlichen parallel zu einer Haupterstreckungsebene der Grundplatte 12 ausgerichtet. Die Vorsprünge 14 sind in einem im Wesentlichen gleichmäßigen Raster auf dem Plattenelement 20 der Grundplatte 12 angeordnet. Die Vorsprünge 14 erstrecken sich im Wesentlichen über die gesamte Oberflächenseite des Plattenelements 20 der Grundplatte 12.

Im Folgenden wird lediglich einer der Vorsprünge 14 beschrieben. Der Vorsprung 14 steht über das Plattenelement 20 hervor. Das Plattenelement 20 und der Vorsprung 14 sind einstückig ausgebildet.

Die Grundplatte 12 weist eine Beschichtung 22 auf (vgl. Fig. 3). Die Beschichtung 22 ist auf der Oberflächenseite der Grundplatte 12 aufgebracht. Die Beschichtung 22 ist auf derjenigen Seite der Grundplatte 12 aufgebracht, auf welcher der Vorsprung 14 angeordnet ist.

Der Vorsprung 14 weist eine Erstreckung 16 auf, welche wesentlich kleiner ist als eine korrespondierende Erstreckung 18 des Plattenelements 20 der Grundplatte 12. Die Erstreckung 16 des Vorsprungs 14 ist im Wesentlichen parallel zu der Haupterstreckungsebene der Grundplatte 12 ausgerichtet. Die korrespondierende Erstreckung 18 des Plattenelements 20 ist im Wesentlichen parallel zu der Haupterstreckungsebene der Grundplatte 12 ausgerichtet. Beispielsweise könnte die Erstreckung des Vorsprungs im Wesentlichen parallel zu einer Breite und/oder einer Länge des Plattenelements ausgerichtet sein, wobei die korrespondierende Erstreckung des Plattenelements insbesondere als die Breite und/oder die Länge des Plattenelements ausgebildet sein könnte.

In dem Verfahren zur Herstellung der Kochfeldplatte 10 wird ein Bearbeitungsbereich 28 der Grundplatte 12 einer Laserbearbeitung unterzogen (vgl. Fig. 3 bis 5). Der in dem Bearbeitungsbereich 28 angeordnete Vorsprung 14 wird mittels der Laserbearbeitung teilweise entfernt. Im vorliegenden Ausführungsbeispiel wird der Vorsprung 14 mittels der Laserbearbeitung in dem Bearbeitungsbereich 28 vollständig entfernt.

Bei der Laserbearbeitung wird ein Ultraviolett-Laser 34 verwendet (vgl. Fig. 3). Bei der Laserbearbeitung wird eine Stromstärke in einem Bereich von 15 A bis 35 A, insbesondere von 20 A bis 30 A und vorteilhaft von 24 A bis 26 A verwendet. Der Ultraviolett-Laser 34 ist als ein gepulster Festkörperlaser ausgebildet. Bei der Laserbearbeitung wird eine Pulsdauer in einem Bereich von 0,1 µs bis 100 µs, insbesondere von 0,5 µs bis 50 µs und vorteilhaft von 0,9 µs bis 1,1 µs verwendet.

Bei der Laserbearbeitung wird eine Linienbreite eines Laserstrahls 24 von im Wesentlichen 35 µm verwendet. Bei der Laserbearbeitung wird eine Frequenz in einem Bereich von 12 kHz bis 18 kHz, insbesondere von 13 kHz bis 17 kHz und vorteilhaft von 14 kHz bis 16 kHz verwendet. Die bei der Laserbearbeitung verwendete Frequenz beträgt im Wesentlichen 15 kHz. Bei der Laserbearbeitung wird eine Abtastgeschwindigkeit in einem Bereich von 22,5 mm/s bis 27,5 mm/s, insbesondere von 23,5 mm/s bis 26,5 mm/s und vorteilhaft von 24,5 mm/s bis 25,5 mm/s verwendet.

Neben dem Vorsprung 14 wird in dem Bearbeitungsbereich 28 mittels der Laserbearbeitung zusätzlich die Beschichtung 22 teilweise entfernt. Im vorliegenden Ausführungsbeispiel werden das teilweise Entfernen der Beschichtung 22 und das teilweise Entfernen des Vorsprungs 14 im Wesentlichen in demselben Verfahrensschritt durchgeführt. In einer alternativen Ausgestaltung ist denkbar, dass das teilweise Entfernen der Beschichtung und das teilweise Entfernen des Vorsprungs in zwei aufeinanderfolgenden Verfahrensschritten durchgeführt werden. Hierbei könnte bei dem teilweisen Entfernen der Beschichtung beispielsweise zwischen einer Vorzugsrichtung des Bearbeitungsbereichs und einer Bearbeitungsrichtung einer Bearbeitungslinie des Laserstrahls ein Winkel von wenigstens im Wesentlichen 90° verwendet werden, wobei insbesondere genau eine Wiederholung durchgeführt werden könnte.

Im vorliegenden Ausführungsbeispiel wird bei dem teilweisen Entfernen der Beschichtung 22 und dem teilweisen Entfernen des Vorsprungs 14 durch die Laserbearbeitung ein Laserstrahl 24 in zwei voneinander verschiedene Bearbeitungsrichtungen 30, 46 bewegt (vgl. Fig. 4). Der Laserstrahl 24 wird in einem ersten Verfahrensschritt in eine erste Bearbeitungsrichtung 30 der Bearbeitungsrichtungen 30, 46 bewegt. Anschließend wird der Laserstrahl 24 aus der ersten Bearbeitungsrichtung 30 in eine zweite Bearbeitungsrichtung 46 gedreht. Der Laserstrahl 24 wird unter Vermeidung einer Abschaltung des Lasers 34, und insbesondere unter Vermeidung einer Unterbrechung der Laserbearbeitung, in die zweite Bearbeitungsrichtung 46 bewegt. Die erste Bearbeitungsrichtung 30 und die zweite Bearbeitungsrichtung 46 schließen miteinander einen kleinsten Winkel von im Wesentlichen 90° ein.

Bei der Laserbearbeitung wird zwischen einer Vorzugsrichtung 26 des Bearbeitungsbereichs 28 und einer Bearbeitungsrichtung 30einer Bearbeitungslinie 32 des Laserstrahls 24 ein Winkel α von im Wesentlichen 45° verwendet (vgl. Fig. 3). Die zweite Bearbeitungsrichtung 46 wird bei der Laserbearbeitung in einem Winkel β von im Wesentlichen 90° relativ zu der ersten Bearbeitungsrichtung 30 bewegt.

Der Laserstrahl 24 wird bei der Laserbearbeitung relativ zu der Grundplatte 12 in zueinander parallelen Bearbeitungslinien 32 mit sich um im Wesentlichen 20 % überlappenden Linienbreiten benachbarter Bearbeitungslinien 32 bewegt (vgl. Fig. 4).Eine erste Bearbeitungslinie 32 und eine zweite Bearbeitungslinie 32 weisen einen Überlapp 50 von im Wesentlichen 20 % auf. Eine Wellenlänge des bei der Laserbearbeitung verwendeten Laserstrahls 24 des Lasers 34 beträgt im Wesentlichen 355 nm.

Im vorliegenden Ausführungsbeispiel wird bei der Laserbearbeitung eine Wiederholungszahl von im Wesentlichen zwei verwendet. Unter einer "Wiederholungszahl" von im Wesentlichen n soll verstanden werden, dass der Bearbeitungsbereich 28 im Wesentlichen n-mal mittels des Laserstrahls 24 bearbeitet und/oder überstrichen wird. Der Bearbeitungsbereich 28 wird bei der Laserbearbeitung im Wesentlichen zweimal mittels des Laserstrahls 24 bearbeitet. Der Laserstrahl 24 wird im Wesentlichen zweimal über den Bearbeitungsbereich 28 geführt.

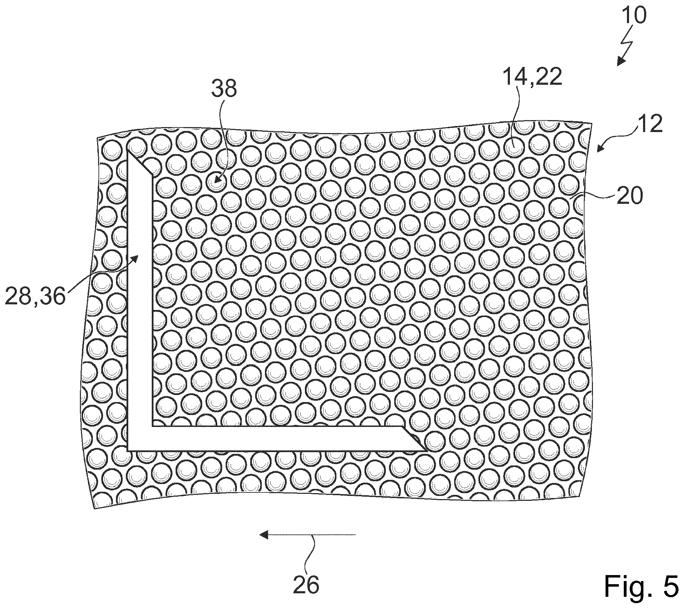

Fig. 5 zeigt die Kochfeldplatte 10, welche durch das oben beschriebene Verfahren zur Herstellung der Kochfeldplatte 10 hergestellt wurde. Die Kochfeldplatte 10 weist einen Bereich 36 auf, welcher frei von Vorsprüngen 14 ist. Der Bereich 36 entsteht aus dem Bearbeitungsbereich 28, welcher bei dem Verfahren der Laserbearbeitung unterzogen wurde. Die Kochfeldplatte 10 weist einen weiteren Bereich 38 auf, in welchem eine Vielzahl von Vorsprüngen 14 angeordnet ist. In der Einbaulage sind der Bereich 36 und der weitere Bereich 38 auf einer Unterseite, insbesondere der Kochfeldplatte 10, angeordnet.

### Bezugszeichen

- 10: Kochfeldplatte
- 12: Grundplatte
- 14: Vorsprung
- 16: Erstreckung
- 18: Erstreckung
- 20: Plattenelement
- 22: Beschichtung
- 24: Laserstrahl
- 26: Vorzugsrichtung
- 28: Bearbeitungsbereich
- 30: Bearbeitungsrichtung
- 32: Bearbeitungslinie
- 34: Laser
- 36: Bereich
- 38: Weiterer Bereich
- 40: Kochfeld
- 42: Bedieneinheit
- 44: Steuereinheit
- 46: Weitere Bearbeitungsrichtung
- 48: Dicke
- 50: Überlapp

## Patentansprüche

1. Verfahren zur Herstellung einer Kochfeldplatte (10), welche aus einer Grundplatte (12) hergestellt wird, **dadurch gekennzeichnet, dass** die Grundplatte eine Vielzahl von Vorsprüngen (14) aufweist, wobei die Vorsprünge (14) auf einer Oberflächenseite des Plattenelements (20) der Grundplatte (12) angeordnet sind, wobei die Oberflächenseite des Plattenelements (20) der Grundplatte (12) im Wesentlichen parallel zu einer Haupterstreckungsebene der Grundplatte (12) ausgerichtet ist, wobei die Vorsprünge (14) in einem im Wesentlichen gleichmäßigen Raster auf dem Plattenelement (20) der Grundplatte (12) angeordnet sind, wobei die Vorsprünge (14) sich im Wesentlichen über die gesamte Oberflächenseite des Plattenelements (20) der Grundplatte (12) erstrecken, wobei zumindest einer der Vorsprünge (14) mittels einer Laserbearbeitung wenigstens teilweise entfernt wird.

2. Verfahren nach Anspruch 1, **dadurch gekennzeichnet, dass** der Vorsprung (14), welcher mittels der Laserbearbeitung wenigstens teilweise entfernt wird, zumindest eine Erstreckung (16) aufweist, welche wesentlich kleiner ist als eine korrespondierende Erstreckung (18) eines Plattenelements (20) der Grundplatte (12).

3. Verfahren nach einem der vorhergehenden Ansprüche, **dadurch gekennzeichnet, dass** die Grundplatte (12) zumindest eine Beschichtung (22) aufweist, die mittels einer Laserbearbeitung wenigstens teilweise entfernt wird.

4. Verfahren nach Anspruch 3, **dadurch gekennzeichnet, dass** ein wenigstens teilweises Entfernen der Beschichtung (22) und ein wenigstens teilweises Entfernen des Vorsprungs (14) wenigstens im Wesentlichen in demselben Verfahrensschritt durchgeführt werden und zwar derart, dass das wenigstens teilweise Entfernen der Beschichtung und das wenigstens teilweise Entfernen des Vorsprungs unter Vermeidung einer Abschaltung des Lasers durchgeführt werden, und/oder dass zwischen einem Abschluss des wenigstens teilweisen Entfernens einer ersten Komponente und einem Beginn des wenigstens teilweise Entfernens einer zweiten Komponente eine Zeitspanne von maximal 60 s liegt.

5. Verfahren nach Anspruch 4, **dadurch gekennzeichnet, dass** bei dem wenigstens teilweisen Entfernen der Beschichtung (22) und dem wenigstens teilweisen Entfernen des Vorsprungs (14) durch die Laserbearbeitung ein Laserstrahl (24) in zwei voneinander verschiedene Bearbeitungsrichtungen (30, 46) bewegt wird.

6. Verfahren nach einem der vorhergehenden Ansprüche, **dadurch gekennzeichnet, dass** zwischen einer Vorzugsrichtung (26) eines Bearbeitungsbereichs (28) und einer Bearbeitungsrichtung (30, 46) einer Bearbeitungslinie (32) eines Laserstrahls (24) ein Winkel (α) von wenigstens im Wesentlichen 45° verwendet wird.

7. Verfahren nach einem der vorhergehenden Ansprüche, **dadurch gekennzeichnet, dass** bei der Laserbearbeitung ein Laserstrahl (24) relativ zu der Grundplatte (12) in zueinander parallelen Bearbeitungslinien (32) mit sich um mindestens 5 % überlappenden Linienbreiten benachbarter Bearbeitungslinien (32) bewegt wird.

8. Verfahren nach einem der vorhergehenden Ansprüche, **dadurch gekennzeichnet, dass** bei der Laserbearbeitung eine Linienbreite eines Laserstrahls (24) von mindestens 30 µm verwendet wird.

9. Verfahren nach einem der vorhergehenden Ansprüche, **dadurch gekennzeichnet, dass** bei der Laserbearbeitung ein Ultraviolett-Laser (34) verwendet wird.

10. Kochfeldplatte, hergestellt durch ein Verfahren nach einem der vorhergehenden Ansprüche, mit zumindest einem Bereich (36), welcher frei von Vorsprüngen (14) ist, und mit zumindest einem weiteren Bereich (38), in welchen eine Vielzahl von Vorsprüngen (14) angeordnet ist.

11. Kochfeldplatte nach Anspruch 10, **dadurch gekennzeichnet, dass** der Bereich (36) und der weitere Bereich (38) in einer Einbaulage auf einer Unterseite angeordnet sind.

12. Kochfeld mit zumindest einer Kochfeldplatte (10) nach Anspruch 10 oder 11.

## Claims

1. Method for producing a hotplate field (10), which is produced from a base plate (12), **characterised in that** the base plate has a plurality of projections (14), wherein at least one of the projections (14) is removed at least partially by means of laser machining, wherein the projections (14) are arranged on a surface side of the plate element (20) of the base plate (12), wherein the surface side of the plate element (20) of the base plate (12) is aligned substantially parallel to a main extension plane of the base plate (12), wherein the projections (14) are arranged in a substantially uniform grid on the plate element (20) of the base plate (12), wherein the projections (14) extend substantially across the entire surface side of the plate element (20) of the base plate (12).

2. Method according to claim 1, **characterised in that** the projection (14) which is removed at least partially by means of laser machining has at least one extension (16) which is essentially smaller than a corresponding extension (18) of a plate element (20) of the base plate (12).

3. Method according to one of the preceding claims, **characterised in that** the base plate (12) has at least one coating (22), which is removed at least partially by means of laser machining.

4. Method according to claim 3, **characterised in that** an at least partial removal of the coating (22) and an at least partial removal of the projection (14) are carried out at least substantially in the same method step, namely such that the at least partial removal of the coating and the at least partial removal of the projection are carried out by avoiding switching off the laser, and/or that a time span of at most 60 s is present between a conclusion of the at least partial removal of a first component and a start of the at least partial removal of a second component.

5. Method according to claim 4, **characterised in that** with the at least partial removal of the coating (22) and the at least partial removal of the projection (14) by the laser machining, a laser beam (24) is moved in two machining directions (30, 46) which differ from one another.

6. Method according to one of the preceding claims, **characterised in that** an angle (α) of at least substantially 45° is used between a preferred direction (26) of a machining region (8) and a machining direction (30, 46) of a machining line (32) of a laser beam (24).

7. Method according to one of the preceding claims, **characterised in that** with the laser machining a laser beam (24) is moved relative to the base plate (12) in machine lines (32) which are parallel to one another and which have line widths of adjacent machining lines (32) which overlap by at least 5%.

8. Method according to one of the preceding claims, **characterised in that** with the laser machining a line width of a laser beam (24) of at least 30 µm is used.

9. Method according to one of the preceding claims, **characterised in that** an ultraviolet laser (34) is used with the laser machining.

10. Hotplate produced by means of a method according to one of the preceding claims, having at least one region (36) which is free of projections (14) and having at least one further region (38) in which a plurality of projections (14) is arranged.

11. Hotplate according to claim 10, **characterised in that** the region (36) and the further region (38) are arranged in an installation position on a lower side.

12. Hotplate with at least one hotplate (10) according to claim 10 or 11.

## Revendications

1. Procédé de fabrication d'une plaque de table de cuisson (10), laquelle est fabriquée d'une plaque de base (12), **caractérisé en ce que** la plaque de base comprend une pluralité de bosses (14),
dans lequel au moins l'une des bosses (14) peut être éliminée au moins en partie au moyen d'un traitement au laser, les bosses (14) étant disposées sur un côté de surface de l'élément en plaque (20) de la plaque de base (12), le côté de surface de l'élément en plaque (20) de la plaque de base (12) étant orienté de manière essentiellement parallèle au plan d'élongation principal de la plaque de base (12), les bosses (14) étant disposées en réseau essentiellement uniforme sur l'élément en plaque (20) de la plaque de base (12), les bosses (14) s'étendant essentiellement sur tout le côté de surface de l'élément en plaque (20) de la plaque de base (12).

2. Procédé selon la revendication 1, **caractérisé en ce que** la bosse (14), laquelle peut être éliminée au moins partiellement au moyen d'un traitement laser, comprend au moins une élongation (16) qui est substantiellement plus petite qu'une élongation (18) correspondante d'un élément en plaque (20) de la plaque de base (12).

3. Procédé selon l'une des revendications précédentes, **caractérisé en ce que** la plaque de base (12) comprend au moins un revêtement (22) qui est éliminé au moins partiellement au moyen d'un traitement laser.

4. Procédé selon la revendication 3, **caractérisé en ce qu'**une élimination au moins partielle du revêtement (22) et une élimination au moins partielle de la bosse (14) est réalisée au moins essentiellement à la même étape de procédé et ce, **en ce que** la au moins une élimination au moins partielle du revêtement et l'élimination au moins partielle de la bosse est réalisée en évitant une extinction du laser et/ou **en ce qu'**entre la fin de l'élimination au moins partielle d'un premier composant et le début de l'élimination au moins partielle d'un deuxième composant s'écoule un lapse de temps de maximum 60 s.

5. Procédé selon la revendication 4, **caractérisé en ce que** lors de l'élimination au moins partielle du revêtement (22) et l'élimination au moins partielle de la bosse (14) par traitement laser, un rayon laser (24) est déplacé dans deux directions de traitement (30, 46) différentes l'une de l'autre.

6. Procédé selon l'une des revendications précédentes, **caractérisé en ce qu'**entre la direction prédominante (26) d'une zone de traitement (28) et la direction de traitement (30, 46) de la ligne de traitement (32) d'un rayon laser (24), on applique un angle (a) d'au moins essentiellement 45°.

7. Procédé selon l'une des revendications précédentes, **caractérisé en ce qu'**en cas de traitement laser, un rayon laser (24) est déplacé par rapport à la plaque de base (12) dans des lignes de traitement (32) parallèles l'une à l'autre avec des lignes de traitement (32) voisines présentant des largeurs de ligne se chevauchant d'au moins 5%.

8. Procédé selon l'une des revendications précédentes, **caractérisé en ce que** lors du traitement laser, on réalise une largeur de ligne d'un rayon laser (24) d'au moins 30 µm.

9. Procédé selon l'une des revendications précédentes, **caractérisé en ce que** lors du traitement laser, on utilise un laser en ultraviolet (34).

10. Plaque de table de cuisson, fabriquée par un procédé selon l'une des revendications précédentes, comprenant au moins une zone (36), laquelle est exempte de bosses (14), et comprenant au moins une autre zone (38), dans lesquelles se trouvent une pluralité de bosses (14).

11. Plaque de table de cuisson selon la revendication 10, **caractérisé en ce que** la zone (36) et l'autre zone (38) se trouvent quelque part en dessous encastrées.

12. Table de cuisson comprenant au moins une plaque de table de cuisson (10) selon la revendication 10 ou 11.
